# FASCICULE DE BREVET EUROPEEN

(11) **EP 1 590 959 B1**
(45) Date de publication et mention de la délivrance du brevet: **26.01.2011**
(21) Numéro de dépôt: 04708382.9
(22) Date de dépôt: 05.02.2004
(51) Int. Cl.: H04N 7/16

(54) **DISPOSITIF SECURISE POUR LA DIFFUSION, L ' ENREGISTREMENT ET LA VISUALISATION A LA DEMANDE DES OEUVRES AUDIOVISUELLES AU FORMAT DE TYPE MPEG-2 TS**
SICHERES GERÄT, DAS AUF ANFORDERUNG ZUM VERTEILEN, AUFZEICHNEN UND ANZEIGEN AUDIOVISUELLER ARBEITEN MIT EINEM FORMAT DES TYPS MPEG-2 TS VERWENDET WIRD
SECURE EQUIPMENT WHICH IS USED, ON REQUEST, TO DISTRIBUTE, RECORD AND DISPLAY AUDIO-VISUAL WORKS WITH AN MPEG-2 TS-TYPE FORMAT

(30) Priorité: 07.02.2003 FR 0301494
(43) Date de publication de la demande: 02.11.2005
(73) Titulaire: NAGRA FRANCE SAS, 75015 Paris (FR)
(72) Inventeur: LECOMTE, Daniel, F-75116 PARIS (FR); GEORGES, Sébastien, F-75005 PARIS (FR)
(74) Mandataire: Leman Consulting S.A.
(86) Numéro de dépôt international: PCT/FR2004/050046
(87) Numéro de publication internationale: WO 2004/073292

(56) Documents cités:
- EP-A- 0 920 209
- WO-A-00/60846
- GRIWODZ C ET AL: "PROTECTING VOD THE EASIER WAY" , PROCEEDINGS OF THE ACM MULTIMEDIA 98. MM '98. BRISTOL, SEPT. 12 - 16, 1998, ACM INTERNATIONAL MULTIMEDIA CONFERENCE, NEW YORK, NY: ACM, US, VOL. CONF. 6, PAGE(S) 21-28 , XP000977484 ISBN: 1-58113-036-8 abrégé

## Description

La présente invention concerne le traitement, la diffusion, l'enregistrement et la visualisation sécurisée de données audiovisuelles et de programmes de télévision, ou plus généralement n'importe quel programme ou séquence multimédia utilisant un format de flux nominal de type MPEG, par des utilisateurs autorisés et propose un système sécurisé pour le traitement, la diffusion, la livraison, l'enregistrement, la copie privée et la visualisation de programmes et de séquences vidéo ou multimédia interactifs.

Le problème général est de fournir un dispositif capable de transmettre de façon sécurisée un ensemble de films ou programmes de haute qualité visuelle à un format de type MPEG-2 TS (« Transport Stream » en anglais ou flux de transport), en direct vers un écran de télévision et/ou pour être enregistré sur le disque dur d'un boîtier reliant le réseau de télétransmission à l'écran de télévision, tout en préservant la qualité audiovisuelle mais en évitant toute utilisation frauduleuse comme la possibilité de faire des copies pirates de films ou de programmes audiovisuels enregistrés sur le disque dur du boîtier décodeur.

Avec les solutions actuelles, il est possible de transmettre des films et des programmes audiovisuels sous forme numérique via des réseaux de diffusion de type hertzien, câble, satellite, etc. ou via des réseaux de télécommunication type DSL (Digital Subscriber Line) ou BLR (Boucle Locale Radio) ou via des réseaux DAB (Digital Audio Broadcasting). Par ailleurs, pour éviter le piratage des oeuvres ainsi diffusées, ces dernières sont souvent cryptées par divers moyens bien connus de l'homme de l'art.

Dans l'état de l'art précédent ***une*** solution est décrite par le document WO 00/60846 (Diva Systems Corporation). Cette invention propose une solution de distribution de Vidéo à la Demande via un système de serveurs répartis. La protection du contenu de la vidéo numérique s'appuie sur un système de cryptage à base de clés numériques. La principale innovation de ce brevet est de permettre un cryptage et un décryptage des flux MPEG-TS, simplifié en ce que l'on procède au préalable à une analyse du flux MPEG afin d'optimiser le cryptage en fonction de la structure du flux. Le temps de calcul est en effet fortement diminué grâce à un cryptage sélectif et optimal du flux MPEG-TS. Cette analyse du flux consiste principalement à marquer les paquets TS contenant une information essentielle pour un décodage correct de la vidéo, au sens MPEG, de façon à ce que dans une deuxième phase de cryptage, seules les données utiles des paquets TS marqués soient cryptées. Ainsi, l'information essentielle n'est pas disponible pour un décodage non autorisé, et le flux ne peut donc pas être affiché, tout en conservant un temps de calcul raisonnable pour le cryptage. Cependant cette solution ne permet pas de résoudre le problème de la sécurité car la protection du flux vidéo repose sur un système de cryptage à base de clés numériques, mais pour lequel le flux vidéo transmis à un équipement récepteur contient, sous une forme cryptée, toutes les informations initialement présentes dans le flux vidéo original. Ainsi, le flux vidéo reçu par l'équipement client contient déjà toutes les informations initialement présentes dans le flux vidéo non crypté, même si elles sont stockées sous une forme qui ne permet pas leur utilisation. Un utilisateur mal intentionné, peut traiter le flux vidéo crypté de façon à le remettre sous une forme utilisable par un décodeur vidéo classique et peut ainsi contourner le système de protection, car une reconstitution directe et correcte du flux audiovisuel à partir du seul flux crypté est possible. Une solution à ce problème consisterait à rendre impossible la reconstitution du flux vidéo original à partir du seul flux vidéo protégé. De plus, dans le cadre de cet art antérieur, les paquets modifiés sont détectables de façon à être reconnus par le module de décryptage. Toutefois rendre facilement détectable les paquets TS cryptés facilite d'autant plus la tâche à des individus mal intentionnés qui souhaiteraient contourner cette protection. Une solution à ce problème consisterait à ne pas permettre la détection des paquets brouillés via une simple analyse du flux. Cet art antérieur ne répond donc pas au problème technique et aux critères de haute sécurité, objet de la présente invention.

Afin d'empêcher l'accès à une copie numérique compressée d'un programme vidéo, une autre solution rencontrée dans l'art antérieur consiste à ajouter la protection sur la vidéo alors qu'elle est encore sous forme analogique, avant la compression numérique. Ainsi, pour retirer la protection associée, il faut traiter le flux vidéo après le décodage MPEG, puisque c'est sous cette forme que la protection a été introduite, ce qui implique que seule une version décompressée du flux non protégé est accessible. Or une version initiale non compressée d'un flux vidéo est difficilement exploitable. Dans cette optique on connaît la solution proposée par le document EP 1 011 269 A1 (Mindport), du même type que celle proposée par le document WO 00/60846 en ce qu'elle s'appuie également sur un cryptage à base de clés numériques. De plus, cette solution n'est pas suffisante car la vidéo reconstituée n'est pas parfaitement identique à la vidéo originale.

Une autre solution consiste à empêcher la possibilité de visionner ou de faire une copie numérique non compressée du flux en conditionnant l'utilisation du flux vidéo à l'obtention d'informations de protection depuis un équipement distributeur. Dans cette optique, on connaît la solution proposée par le document EP 0 975 165 A2 (Sony Corporation), similaire à celle du document WO 00/60846 en ce qu'elle utilise un cryptage s'appuyant sur des clés numériques. Cependant cette solution n'est pas suffisante pour remédier au problème technique de la sécurité, car les informations envoyées depuis l'équipement distributeur vers l'équipement destinataire pour l'utilisation du flux vidéo sont des informations liées aux droits de reproduction limités du flux vidéo. Ainsi, le flux vidéo reçu par l'équipement client contient là aussi toutes les informations initialement présentes dans le flux vidéo non protégé.

*On a également proposé dans le document* EP 0 920 209 *un procédé de codage dans lequel on génère un premier flux conforme au format MPEG-2 TS, modifié en ce que tout ou partie des paquets TS le constituant ont été substitués par des paquets de même structure mais dont le contenu a été modifié. Le codage selon D1 consiste à opérer des permutations entre les coefficients DC et AC.*

L'invention concerne dans son acception la plus générale un procédé ***selon la revendication 1.***

L'invention concerne également un équipement pour la fabrication d'un flux vidéo pour la mise en oeuvre du procédé, comportant au moins un serveur multimédia contenant les séquences vidéos originales et **caractérisé en ce qu**'il comporte un dispositif d'analyse du flux vidéo provenant dudit serveur pour générer lesdits deux flux.

L'invention concerne aussi un équipement pour l'exploitation d'un flux vidéo pour la mise en oeuvre du procédé, comprenant un lecteur standard de flux MPEG-2 TS, au moins une interface d'enregistrement [disque dur] destiné à stocker le contenu dudit premier flux et au moins une interface d'affichage, **caractérisé en ce qu**'il comporte un moyen pour la recomposition du flux original à partir desdits deux flux.

Enfin, l'invention porte sur un système pour la transmission d'un flux vidéo comprenant un équipement de production d'un flux vidéo, au moins un équipement d'exploitation d'un flux vidéo et au moins un réseau de communication entre l'équipement de production et le(s) équipement(s) d'exploitation.

La présente invention sera mieux comprise à la lecture de là description d'un exemple non limitatif de réalisation qui suit, se référant aux dessins annexés où :
- la figure 1 décrit l'architecture d'ensemble d'un système pour la mise en oeuvre du procédé selon l'invention
- la figure 2 représente un mode de réalisation particulier du système d'analyse et de synthèse de flux de type MPEG conforme à l'invention

L'invention concerne un flux audiovisuel au format MPEG-2 TS contenant au moins un flux vidéo élémentaire empaqueté. Le format du flux vidéo empaqueté utilisé doit avoir les caractéristiques suivantes :
- ce format doit décomposer les données en trames [frame], chaque trame comprenant au moins une image numérique I (Intra) complète ;
- chaque image I se décompose en macroblocs d'une taille donnée, lesdits macroblocs se décomposant eux-mêmes en blocs d'une taille donnée ;
- chaque image I contient des coefficients de corrélation entre les différents blocs et/ou macroblocs des images I.

Dans la description qui suit, l'exemple concerne un flux MPEG-2 TS contenant un flux MPEG-2 vidéo sans que cela ne constitue une limitation de la portée de la protection. L'invention s'applique toutefois de la même façon pour des flux multimédia MPEG-4, directement au format TS ou multiplexés dans un flux MPEG-2 TS.

Le principe général d'un procédé de sécurisation d'un flux audiovisuel est exposé ci-après. L'objectif est d'autoriser les services de vidéo à la demande et à la carte à travers tous les réseaux de diffusion et l'enregistrement local dans le boîtier décodeur numérique de l'usager. La solution consiste à conserver en permanence à l'extérieur de l'habitation de l'usager, en fait dans le réseau de diffusion et de transmission, une partie du programme audiovisuel enregistré, cette partie étant primordiale pour visualiser ledit programme audiovisuel sur un écran de télévision ou de type moniteur, mais étant d'un volume très faible par rapport au volume total du programme audiovisuel numérique enregistré chez l'usager. La partie manquante sera transmise via le réseau de diffusion (transmission) au moment de la visualisation dudit programme audiovisuel numérique préenregistré chez l'usager.

La plus grande partie du flux audiovisuel, appelé « premier flux » sera donc transmise via un réseau de diffusion classique alors que la partie manquante appelée « deuxième flux » sera envoyée à la demande via un réseau de télécommunication bande étroite comme les réseaux téléphoniques classiques ou les réseaux cellulaires de type GSM, GPRS ou UMTS ou en utilisant une petite partie d'un réseau de type DSL ou BLR, ou encore en utilisant un sous-ensemble de la bande passante partagée sur un réseau câblé.

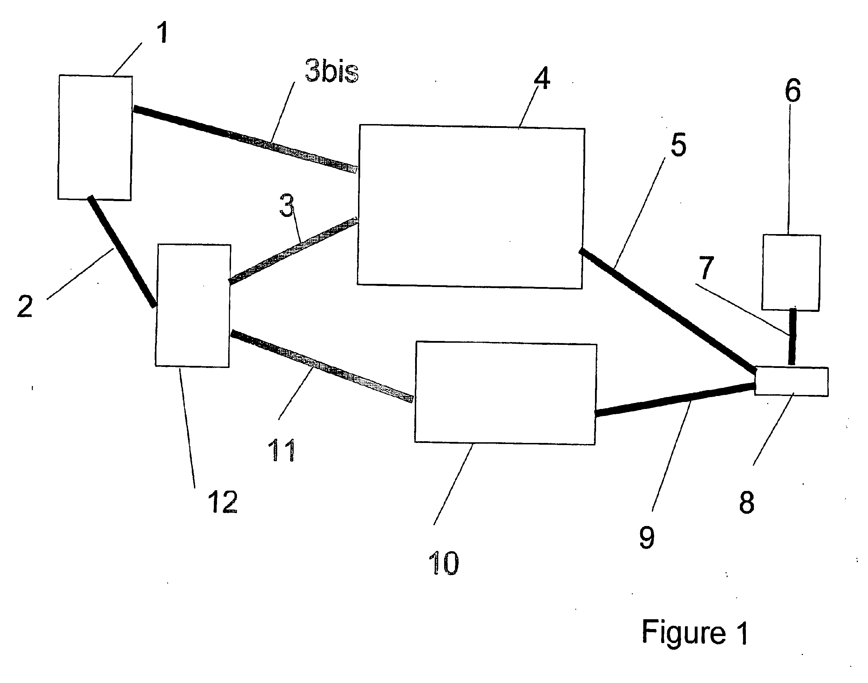

Sur le dessin en annexe, la figure 1 est un schéma de principe d'un système de distribution selon la présente invention.

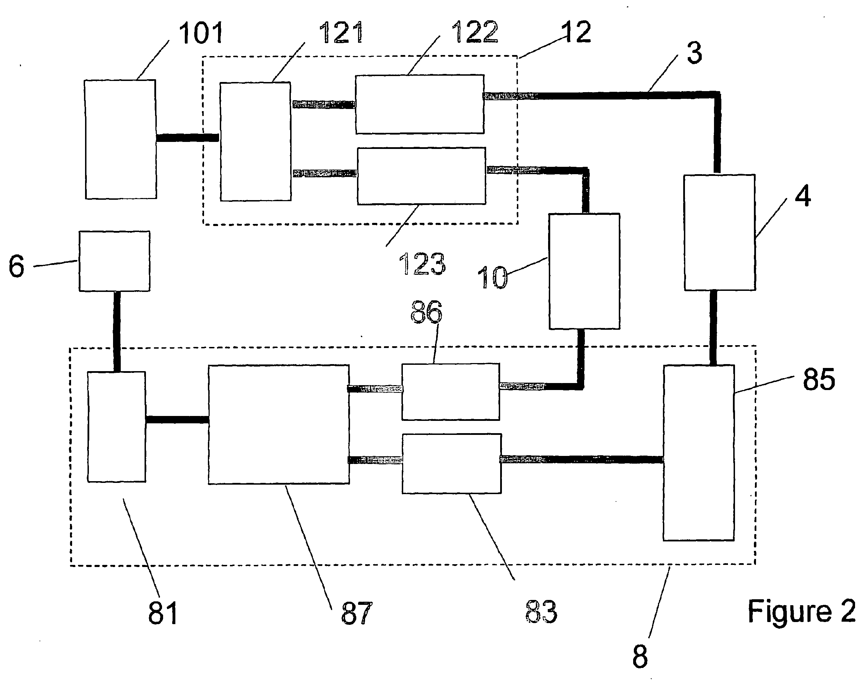

La figure 2 représente un mode de réalisation particulier du système d'analyse, de protection et de reconstitution de flux conforme à l'invention.

Sur la figure 1, l'agencement d'interfaçage vidéo (8) est adapté pour relier au moins un dispositif d'affichage, par exemple un moniteur, un vidéo projecteur ou un dispositif de type écran de télévision (6), à au moins une interface de réseau de transmission et de diffusion large bande (4) et à au moins une interface de réseau de télécommunication (10). Selon la présente invention, cet agencement est composé d'un module (8) comprenant principalement, d'une part, une unité de traitement adaptée pour traiter, en particulier reconstituer le flux original et décoder tout flux vidéo de type MPEG selon un programme logiciel de décodage et de reconstitution pré-chargé, de manière à l'afficher, en temps réel ou différé, de le stocker, de l'enregistrer et/ou de l'envoyer sur un réseau de télécommunication et, d'autre part, au moins une interface d'écran (7) et une interface de connexion à un réseau local ou étendu (5) et/ou (9). Le réseau de transmission et de diffusion large bande (4) et le réseau de télécommunication (10) pouvant être confondus en un seul réseau.

Le disque dur du module (8) peut être utilisé comme mémoire tampon pour stocker momentanément au moins une partie du programme ou de la séquence vidéo à afficher, en cas de visualisation différée ou de limitation dans la bande passante du réseau de transmission. La visualisation peut être retardée ou différée à la demande de l'utilisateur ou du portail (12).

Comme le montre la figure 1, l'interface de connexion (5) est reliée à un réseau de transmission et de diffusion large bande (4) telle qu'un modem, un modem satellite, un modem câblé, d'une interface de ligne à fibre optique ou d'une interface radio ou infrarouge pour la communication sans-fil.

C'est par cette liaison classique de diffusion vidéo que seront transmis les contenus des programmes audiovisuels comme des films. Toutefois, de façon à ne pas laisser faire de copies pirates, avant de transmettre le contenu audiovisuel depuis le serveur (1) ou le portail (12) il est prévu de conserver une petite partie du contenu audiovisuel dans le portail (12).

En cas de visualisation d'un programme audiovisuel en temps réel, cette petite partie du contenu audiovisuel conservée dans le portail (12) sera également envoyée au module (8) via le réseau de télécommunication (10).

Comme les images successives d'une séquence vidéo comportent un grand nombre d'éléments visuels identiques, MPEG n'enregistre que les éléments qui diffèrent les images successives. Ainsi, en modifiant uniquement une image entière de référence I et en conservant les informations numériques aptes à permettre sa reconstitution dans le portail (12), les images successives qui dépendent de cette image I de référence sont également affectées par la dégradation, et il n'est pas nécessaire d'y apporter des modifications puisqu'elles feront diverger le flux visualisé en raison des perturbations apportées aux images I de référence. L'objet de la partie système de MPEG-2 est de permettre de combiner un ou plusieurs flux élémentaires de données vidéo et audio, ainsi que d'autres types, pour former des flux isolés ou multiples se prêtant à l'enregistrement ou à la transmission. La sous-partie TS de la partie système de la norme MPEG-2 décrit un format de flux de données permettant de diffuser des programmes audiovisuels sur des réseaux exposés à des erreurs de transmissions comme par exemple le câble ou le satellite. Les flux conformes à la partie TS (« Transport Stream » en anglais ou flux de transport) de MPEG-2, les flux de transport, sont appelés flux MPEG-2 TS dans la suite. L'opération qui consiste à former un flux MPEG-2 TS à partir de un ou plusieurs flux élémentaires s'appelle multiplexage, l'opération inverse d'extraction des flux élémentaires au sein d'un flux MPEG-2 TS s'appelle démultiplexage. Chaque flux MPEG-2 TS est composé d'une succession de paquets de 188 octets. La taille de ces paquets (autrement appelés paquets TS) est fixe. Chaque paquet contient un en-tête permettant notamment d'identifier sa charge utile (ou « payload » en anglais) ainsi que d'autres données numériques. La charge utile des paquets TS est mise à profit pour transporter les données à diffuser, comme par exemple les flux élémentaires audio et vidéo. Les flux élémentaires multiplexés au sein d'un flux MPEG-2 TS sont préalablement empaquetés de façon à former des flux élémentaires empaquetés (ou PES pour « Packetized Elementary Stream » en anglais). Ces PES contiennent notamment, dans les en-têtes des paquets qui les forment, des informations permettant de synchroniser les flux vidéo et audio qui composent un programme audiovisuel. Les paquets formant un PES sont de taille variable. Certains paquets TS contiennent des données permettant d'associer des flux élémentaires de façon à générer un programme audiovisuel, comme par exemple associer une piste vidéo avec la ou les piste(s) audio appropriée(s). Par souci de simplification, on appelle régulièrement flux vidéo un flux vidéo élémentaire empaqueté, ailleurs dans ce document. L'invention s'applique également de la même façon à un flux audio correspondant à un flux audio empaqueté.

L'invention consiste à substituer certains paquets TS du flux nominal par des paquets de même structure et permettant au flux obtenu, ledit premier flux, de rester conforme à la norme MPEG-2, mais dont les contenus ont été modifiés de façon à altérer l'affichage. Cette substitution est effectuée en deux étapes :
- identification des paquets TS vidéo à modifier ;
- analyse et modification du contenu des paquets TS à modifier.

L'identification du contenu des paquets TS consiste à sélectionner, au sein du flux MPEG-2 TS, les paquets porteurs d'information vidéo. Cette opération est similaire à une opération de démultiplexage de flux MPEG-2 TS, bien connue de l'homme de l'art.

La deuxième étape consiste à analyser et modifier le flux vidéo MPEG-2 au sein des paquets TS du flux nominal au format MPEG-2 TS.

Un flux vidéo numérique de type MPEG-2 est constitué de séquences d'images (ou plans ou frames (trames)), regroupées en groupes d'images « Groups Of Pictures » (GOPs). Une image peut être de type I (Intra), P (Prédite), B (Bidirectionnelle). Les images I sont les images de référence, elles sont entièrement codées et sont donc de taille élevée et ne contiennent pas d'information sur le mouvement. Les plans P sont des plans prédits à partir de plans précédents, que ce soit I et/ou P par des vecteurs de mouvement dans une seule direction, dite en avant (« forward » en anglais). Les plans B sont dits bidirectionnels, ils sont liés aux plans I et/ou P les précédant ou les suivant par des vecteurs de mouvement dans les deux directions temporelles (en avant et en arrière ou « backward » en anglais). Les vecteurs de mouvement représentent des vecteurs bidimensionnels utilisés pour la compensation de mouvements, qui procurent la différence de coordonnées entre une partie de l'image courante et une partie de l'image de référence. Une image est organisée par slices ou tranches, comportant des macroblocs, eux-mêmes constitués de blocs, contenant des éléments décrivant le contenu du flux vidéo, par exemple les coefficients DC issus d'une transformation fréquentielle et relatifs au fondamental, c'est-à-dire à la valeur moyenne des coefficients d'un bloc, ou alors les coefficients AC relatifs aux fréquences plus élevées. La modification apportée au flux vidéo consiste à utiliser les corrélations entre les coefficients DC dans une image I et les corrélations entre les images I, B et P, afin de pouvoir manipuler l'aspect et la validité visuelle de la séquence à laquelle appartient l'image I en question.

En effet, étant donné que les images I sont les porteurs principaux d'information dans une séquence MPEG vidéo, toute modification importante affectant ces images I aura nécessairement un impact sur la validité de la séquence.

Ainsi, la possibilité d'obtenir des dégradations importantes des images I sans effectuer de manipulations compliquées est offerte par la corrélation entre les coefficients DC dans cette image I. Ces coefficients, étant fortement dépendants les uns des autres, car codés en différentiel, déterminent dans une grande partie la valeur des coefficients de la même nature qui suivent. C'est ainsi que, en modifiant l'information qui y est contenue, on modifie profondément les images I et par conséquent toute la séquence MPEG qui suit cette image I.

Chaque macrobloc d'une image I contient six blocs, chacun d'entre eux commençant par un coefficient DC. Quatre blocs correspondent à la luminance (Y), et deux à la chrominance (Cb et Cr) du macrobloc. La valeur écrite dans un fichier du flux MPEG représentant un coefficient DC est en effet la différence entre la vraie valeur de ce coefficient et celle du coefficient correspondant qui précède et qui, pour les blocs Y, peut se trouver dans le même macrobloc ou dans le macrobloc précédent, tandis que pour les blocs Cb et Cr il se trouve toujours dans le macrobloc précédent. Une modification de l'une de ces différences entraînera automatiquement une modification d'information dans tous les macroblocs qui suivent.

Cette méthode est optimale pour la dégradation visuelle du flux MPEG vidéo en utilisant les coefficients DC des blocs, mais elle peut être appliquée également aux coefficients AC. Il est aussi envisageable de modifier certains de ces coefficients AC de manière aléatoire.

De plus, les images B et P du flux MPEG contiennent également des coefficients AC et DC et sont donc également traitées par l'invention.

La modification des coefficients AC et DC décrite ci-dessus est effectuée sur le contenu vidéo des paquets TS à substituer. Toutefois, substituer un de ces coefficients par un coefficient de même nature, mais aléatoire, ne garantit pas que le flux MPEG-2 TS résultant respecte encore la norme : la taille des coefficients AC et DC insérés doit être la même que la taille des coefficients initiaux. Dans le cas contraire le multiplexage des différents flux composant le flux nominal MPEG-2 TS, risque de ne plus être correct. De plus, changer la taille des coefficients pourrait modifier le débit binaire du flux MPEG-2 TS, ce qui peut poser de gros problèmes lors de sa diffusion sur des réseaux classiques du type satellite ou câble. C'est pourquoi les coefficients aléatoires insérés doivent avoir exactement la même taille binaire que les coefficients d'origine. Dans la suite, nous allons expliquer comment effectuer des modifications de coefficients DC et de coefficients AC, sans changer la taille des mots binaires sur lesquels ils sont codés. Il est toutefois parfaitement possible de modifier un autre champ binaire du flux vidéo de façon complémentaire, de manière à dégrader davantage l'affichage du programme vidéo modifié, ces modifications gardant le flux conforme à la norme.

Les coefficients DC sont codés sur deux champs binaires dans MPEG-2 : un champ « dct_dc_size » que nous appellerons « taille », et un champ « dct_dc_differential » que nous appellerons « différentiel ». Le premier champ « taille » permet d'indiquer le nombre de bits sur lequel est codé la valeur « différentiel ». Substituer un coefficient DC par un coefficient aléatoire est donc possible en laissant le champ « taille » inchangé, et en remplaçant le champ « différentiel » par un mot binaire aléatoire de longueur « taille ».

Les coefficients AC sont codés sous forme d'une liste de couples (run, level). Un « run » (série en français) étant le nombre de coefficients AC nuls précédant un coefficient AC de valeur « level » (niveau en français). Ainsi, la suite de coefficients AC 0, 0, 1, 0, 0, 0, 5 est écrite sous la forme (2,1),(3,5). Ces couples (run, level) sont de plus écrits dans le flux binaire en utilisant une technique de codage à longueur variable : les couples d'occurrence les plus grandes sont codés sur un nombre de bits plus faible que les couples plus rarement rencontrés. Les couples pour lesquels aucun code à longueur variable n'a été prévu (parce que leur fréquence d'apparition est trop faible) sont écrits dans le flux à l'aide d'un « escape code » ou code d'échappement. Cette dernière technique consiste à écrire un mot binaire prédéfini dans le flux, indiquant au décodeur que le « run » et le « level » qu'il est en train de lire sont codés de manière séparée et indépendante, sur des mots binaires à longueur fixe (6 bits pour le « run » et 12 pour le « level » signé) juste après le code d'échappement. Il existe en général plusieurs couples (« run », « level ») possibles pour une longueur binaire donnée. Ainsi, les mots binaires 0100 et 0101 correspondent à deux couples (« run », « level ») différents. Remplacer des coefficients AC d'un flux vidéo MPEG-2 par des valeurs aléatoires consiste donc à choisir un mot binaire autorisé de même taille que le mot binaire à modifier, et l'écrire à sa place. La norme MPEG-2 définit deux tables possibles de correspondance entre des couples « run », « level » et des mots binaires (table B-14 et B-15 de la norme MPEG-2 vidéo); pour trouver un couple de même taille que le couple à substituer, il suffit donc de parcourir la table adaptée et de trouver un couple approprié. Ceci n'est pas toujours possible pour les mots binaires les plus courts, dans ce cas il faut laisser le couple inchangé. Dans le cas où le couple (« run », « level ») est écrit à l'aide d'un « escape code » ou code d'échappement, on remplace les mots binaires correspondant au « run » et au « level » par des valeurs aléatoires, sur le même nombre de bits.

Les modifications apportées au flux vidéo élémentaire ne sont apportées qu'au sein de certains paquets TS, choisis en fonction de leurs caractéristiques et de leur contenu. Plusieurs exemples de réalisation sont décrits ci-après.

Dans un premier exemple de réalisation, le flux MPEG-2 TS est analysé de façon à pouvoir identifier et traiter les mots binaires correspondant aux coefficients DC et AC, contenus dans les paquets TS. Un ou plusieurs flux vidéo sont traités. La suite du document décrit le procédé utilisé pour traiter un flux vidéo. Dans cet exemple de réalisation, tous les coefficients DC et AC identifiés sont modifiés de la manière décrite ci-dessus. Le procédé garde en mémoire une copie originale du paquet TS qu'il est en train de traiter. Lorsque le système a fini de traiter un paquet TS donné, il décide soit de reprendre le paquet TS d'origine (non modifié) et de l'écrire dans le flux de sortie (autrement appelé premier flux), soit d'écrire le paquet qu'il vient d'obtenir par modification du paquet original. Ledit premier flux obtenu possède donc des paquets TS dont les contenus ont été entièrement modifiés, et des paquets TS dont les contenus sont inchangés.

Si plusieurs flux vidéo sont traités simultanément, le traitement à réaliser est le même pour chaque flux vidéo, et les différents traitements sont réalisés de manière indépendante.

Le choix des paquets TS modifiés à écrire en sortie du module d'analyse et de modification dépend de la quantité de modifications à apporter au flux. Il dépend également du contenu vidéo traité. Ainsi une modification apportée à un mot binaire long est plus dégradante visuellement qu'une modification apportée à un mot binaire court car dans le cas d'un mot binaire long, le nombre de mots binaires de même taille disponibles est plus important. Ainsi, il y a plus de chance que la valeur insérée soit très éloignée de la valeur d'origine pour un mot long que pour un mot court. Lors de la décision d'écrire ou non le paquet TS en sortie, le système teste la longueur moyenne des coefficients qui ont été modifiés au sein du paquet, et si celle-ci est supérieure à un seuil, il écrit le paquet TS modifié en sortie, sinon, c'est le paquet TS d'origine, non modifié, qu'il écrit en sortie du système d'analyse et de modification.

Dans une variante de cet exemple de réalisation, seuls les paquets TS contenant de l'information relative aux images I du flux vidéo sont traités et écrits dans ledit premier flux.

Dans une autre variante de cet exemple de réalisation, les paquets TS contenant de l'information relative aux images I et P ou B du flux vidéo sont traités et écrits dans ledit premier flux.

Dans une autre variante de cet exemple de réalisation, seuls les paquets TS contenant de l'information relative aux débuts des « slices » ou tranches composant les images I du flux vidéo sont traités et écrits dans ledit premier flux.

Dans un autre exemple de réalisation, les coefficients AC et DC ne sont pas tous modifiés au sein du flux vidéo traité. Le système d'analyse et de modification utilise un « interrupteur » de contrôle de modification ou substitution. Lorsque le système commence à traiter un paquet TS donné, il décide de le modifier ou non de manière aléatoire. S'il décide de le modifier, il place son interrupteur sur la position « modification » ; dans ce cas tous les coefficients AC et DC qui suivent sont modifiés jusqu'à ce que l'interrupteur repasse à la position « recopie ». Le système passe à la position « recopie » lorsqu'il commence le traitement d'un paquet TS qu'il ne souhaite pas modifier.

Dans un variante de cet exemple de réalisation, en plus des modifications apportées aux données vidéos contenues dans les paquets TS, le procédé modifie également les valeurs de tout ou partie des champs d'indicateur de début de charge utile du flux vidéo traité, ledit indicateur étant appelé « payload_unit_start_indicator » dans la norme MPEG-2. Le champ « payload_unit_start_indicator » est un champ binaire de 1 bit, présent dans l'en-tête de chaque paquet TS, utilisé pour indiquer la présence d'un en-tête PES dans la charge utile du paquet.

Dans un autre exemple de réalisation, les modifications apportées au flux audiovisuel concernent tout ou partie des flux audio inclus dans le flux d'origine. Les modifications apportées au flux audio sont du même type que celles décrites pour la vidéo, mais adaptées aux spécificités des formats numériques audio, par exemple : substitution de coefficients spectraux ou des facteurs d'échelle par des valeurs aléatoires.

Dans tous les exemples de réalisation, les paquets TS d'origine, correspondant à des paquets modifiés dans le premier flux modifié, sont conservés dans un deuxième flux de format quelconque dans le portail (12) et ne sont pas transmis au module (8).

Dans un autre exemple de réalisation, seules certaines parties du contenu des paquets substitués sont effectivement modifiées. Par exemple, seuls 5 coefficients DC sont modifiés au sein d'un paquet TS, les autres éléments du paquet restent inchangés.

Avantageusement, ledit deuxième flux contient uniquement les données nécessaires pour effectuer les substitutions d'octets à appliquer sur ledit premier flux pour obtenir ledit flux nominal. Ledit deuxième flux contient donc les positions et les valeurs d'origine des octets modifiés. Cela évite d'avoir à retransmettre l'ensemble du paquet TS d'origine dans le cas où les modifications sont peu nombreuses pour le paquet concerné.

Lorsqu'il lit la séquence binaire, un décodeur classique MPEG identifie le début d'une image codée, puis le type de l'image. Pour éviter toute confusion entre un boîtier décodeur standard souvent appelé « Set Top Box ou STB », le décodeur standard MPEG sera appelé « Lecteur » (« Player » ou « Viewer ») dans la suite du document. Ce Lecteur peut être réalisé de manière physique (ou « hardware ») et/ou de manière informatique (« software »). Le lecteur MPEG décode successivement chaque macrobloc de l'image. L'image est reconstruite quand tous ses macroblocs ont été traités. S'il s'agit d'une image I, elle constitue une image de référence pour les images subséquentes et elle est stockée à la place de l'image de référence la plus ancienne. Les images sont ainsi disponibles, sous forme numérique, pour un traitement ultérieur et affichage, au gré de l'application.

Certains paquets TS du flux audiovisuel sont donc conservés dans le portail (12). Par contre, en lieu et place des paquets TS non transmis, le dispositif conforme à l'invention intercalera des paquets TS erronés de même nature et taille que les paquets enlevés et conservés dans le portail (12) de sorte que le Lecteur standard MPEG du module (8) ne soit pas perturbé par ces modifications qu'il ignorera et reconstituera en sortie un flux de sortie MPEG qui sera non correct du point de vue visuel pour un être humain mais correct du point de vue format MPEG.

Le Lecteur MPEG du boîtier décodeur (8) est un Lecteur standard MPEG et n'est en aucune manière modifié ou affecté par les changements apportés au sein du flux MPEG.

Comme le montre la figure 1, l'interface de connexion (9) est reliée à un réseau de télécommunication étendu (10), directement ou par un réseau local servant de réseau d'accès et est constitué par exemple d'une interface de ligne d'abonné (Réseau téléphonique analogique ou numérique, DSL, BLR, GSM, GPRS, UMTS, etc.).

Ainsi donc, les programmes audiovisuels sont diffusés de façon classique en mode multi-diffusion (« broadcast ») via le réseau de transmission large bande (4) de type hertzien, câble, satellite, numérique hertzien, DSL, etc. depuis le serveur (1) directement via la liaison (3bis) ou via le portail (12) via la liaison (2) et (3) vers le module décodeur (8) à travers la liaison (5). Chaque programme audiovisuel ainsi diffusé peut être crypté ou non, et, conformément à la présente invention, les flux de type MPEG comportent des paquets TS substitués par des paquets dont les contenus ont été modifiés comme décrit ci-dessus. En fonction des paramètres choisis par l'usager ou des informations transmises par le serveur de diffusion, certains programmes audiovisuels ainsi modifiés et incomplets sont enregistrés dans le disque dur du boîtier (8).

Lorsque l'usager désire visualiser un programme audiovisuel ainsi enregistré dans le disque dur de son boîtier (8) il en fait la demande de façon classique au moyen d'une télécommande reliée à son boîtier (8) qui se connecte alors automatiquement au portail (12) via la liaison (9) de type réseau local ou accès direct et à travers le réseau de télécommunication (10) lui-même relié au portail (12) via la liaison (11). Tout au long de la visualisation du programme audiovisuel, les liaisons (9) et (11) restent établies et permettent au boîtier (8) de recevoir les fonctions et les paramètres de remise en ordre et de restauration des paquets TS modifiés, ainsi que les paquets TS originaux conservés dans le portail (12). Les paquets TS ainsi transmis ne sont jamais enregistrés dans le disque dur du boîtier (8) car le flux vidéo reconstitué par le module de synthèse est directement affiché sur l'écran de visualisation (6) via la liaison (7) après avoir été traité par le Lecteur du boîtier (8) à partir de sa mémoire locale volatile. Une fois traités et visualisés, les paquets TS originaux venant d'être transmis par le portail (12) sont effacés de la mémoire volatile locale du boîtier (8).

A chaque fois que l'usager voudra regarder un programme enregistré dans le disque dur du boîtier (8) le boîtier (8) se connectera automatiquement vers le portail (12). Le reconstitution du flux MPEG d'origine dans l'agencement d'interfaçage vidéo (8) est sans aucune perte.

De même lorsque l'usager fera une pause, la transmission dudit deuxième flux, contenant les paquets TS d'origine, en provenance du portail (12) sera interrompue jusqu'à la reprise de la visualisation, garantissant ainsi que toutes les informations d'un programme audiovisuel ne se retrouvent dans le boîtier (8) à un moment donné et évitant ainsi à une personne mal intentionnée de faire des copies pirates de ces enregistrements.

Avantageusement, ledit deuxième flux est crypté avant sa transmission au boîtier décodeur (8) selon une technique de cryptage standard.

Dans un mode de réalisation particulier, ledit deuxième flux contenant les informations permettant la reconstitution et la visualisation du programme audiovisuel par l'usager est structuré de telle sorte qu'il respecte la norme MPEG-2 TS.

Dans un mode de réalisation particulier, les réseaux de communication (4) et (10) sont confondus.

Dans une variante de ce mode de réalisation particulier dans lequel ledit deuxième flux est structuré selon le format MPEG-2 TS, ledit deuxième flux est multiplexé avec le flux MPEG-2 TS contenant ledit premier flux. Par exemple, ledit deuxième flux est déclaré en tant que données « utilisateur privé », au sein du programme contenant ledit premier flux, comme cela est prévu par la norme MPEG-2.

Avantageusement, ledit deuxième flux est crypté.

Bien que la présente invention soit plus particulièrement axée sur les flux vidéo inclus dans les flux MPEG-2 TS, il est entendu que toute information multimédia interactive et toutes données interactives multiplexées dans un flux MPEG-2 TS peuvent être traitées par le présent agencement et le présent système, les données vidéo de type MPEG étant les plus élaborées. La présente invention sera mieux comprise grâce à la description suivante présentant la base physique de la présente invention et en référence à la figure 2 du dessin en annexe représentant un mode de réalisation préféré de cette dernière en tant qu'exemple non limitatif de réalisation particulièrement bien adaptée pour les réseaux câblés et de satellites.

Le flux MPEG-2 TS (101) complet est analysé par le dispositif d'analyse (121) du portail (12) et sera ainsi séparé en un flux de type MPEG-2 TS, ledit premier flux, mais dont certains paquets TS auront été substitués et qui sera envoyé via la sortie (122) du portail vers le réseau de diffusion transmission large bande (4).

L'autre partie du flux MPEG modifié, ledit deuxième flux, sera mémorisée dans la mémoire tampon (123) du portail (12). Pour chaque flux MPEG ainsi diffusé, le portail (12) conservera dans une mémoire tampon (123) les modifications qui auront été apportées à ce flux MPEG-2 TS par l'analyseur (121) du portail (12) ainsi que les paquets TS originaux. Il est précisé que, pour un même flux d'entrée MPEG-2 TS (101) le traitement du flux peut être différent pour chaque utilisateur (8) et/ou pour chaque groupe d'utilisateurs (8). Ainsi, la mémoire tampon (123) du portail (12) comprend une zone de mémoire différente pour chaque utilisateur.

Dans l'exemple réalisé qui suit, seuls les paquets TS vidéo contenant le début d'une slice (ou tranche) d'une image I dont le contenu est relatif à une image I, sont modifiés.

Décrivons maintenant en détail les différentes étapes pour un utilisateur.

Le portail (121) a choisi le flux MPEG-2 TS (101) qu'il va devoir envoyer à l'utilisateur (8) pour être regardé sur son écran de télévision (6). Cet utilisateur est relié à un réseau câblé numérique de diffusion (4) et à un réseau de télécommunication ADSL (10).

Le système d'analyse (121) du portail (12) va donc lire le flux entrant MPEG-2 TS (101) et, chaque fois qu'il détecte un paquet TS à modifier, il analyse son contenu. Cette analyse lui permet de reconnaître dans le code les coefficients DC et AC, et de les substituer par des valeurs aléatoires sans changer leur taille, au sein du paquet TS, afin de rendre les images (et par conséquent la séquence) non acceptables du point de vue perception visuelles humaines. Les vrais paquets TS seront stockés dans le tampon de sortie (123), qui permettra plus tard la reconstitution de la séquence de départ dans le boîtier (8), en suivant le schéma inverse.

Le système d'analyse et de modification (121) inscrit alors le vrai paquet TS dans le tampon (123). Le système d'analyse (121) continue son analyse jusqu'à la fin du flux d'entrée MPEG.

Le nouveau flux MPÉG modifié est alors enregistré dans le tampon de sortie (122) pour être diffusé sur le réseau de diffusion (4) à travers la liaison (3). Les paquets TS substitués du flux MPEG-2 TS entrant (101) sont mémorisés dans le tampon (123) du portail (12).

Pendant ce temps, et de façon totalement non synchronisée, le flux de sortie MPEG-2 TS modifié en provenance du tampon de sortie (122) du portail (12) est diffusé via le réseau large bande (4) vers un ou plusieurs utilisateurs (8) et stocké sur le disque dur (85).

La phase décrite ci-dessus correspond à la première phase de préparation du flux MPEG-2 TS par le portail (12), à sa transmission via le réseau large bande (4) et à son enregistrement dans un décodeur (8). Ce décodeur peut alors afficher ce flux MPEG-2 TS enregistré dans son disque dur (85). Pour cela, le système de synthèse (87) du décodeur (8) va lire le fichier MPEG-2 TS depuis son disque dur (85) et va l'envoyer vers un lecteur classique MPEG-2 TS (81). Si aucune donnée complémentaire n'est reçue par le système de synthèse (87), alors le flux MPEG-2 TS qui parvient au lecteur (81) est traité et affiché tel quel, ce qui provoque une distorsion importante de l'affichage sur l'écran de visualisation (6). En effet, les paquets TS modifiés qui sont traités par le système de synthèse (87) ne correspondent pas aux paquets TS qui sont nécessaires pour une visualisation correcte, puisque certains coefficients DC et AC ont été substitués par des coefficients aléatoires. Par contre, comme le flux enregistré est bien un flux de type MPEG-2 TS, le lecteur (81) ne fait aucune différence et affiche les informations sur l'écran de sortie (6) qui apparaissent bien comme des données d'un flux vidéo MPEG-2 TS mais totalement incohérentes pour l'oeil de l'être humain qui regarde l'écran (6). Toute copie du flux MPEG-2 TS en provenance du disque dur (85) du boîtier (8) produira le même effet visuel lors de sa restitution par un lecteur MPEG quelconque. Lorsque l'usager du décodeur (8) veut réellement visualiser sur son écran (6) le programme audiovisuel enregistré sur son disque dur (85), il en fait la demande au système de synthèse (87) avec sa télécommande comme il le ferait avec un magnétoscope ou un lecteur de DVD présentant un menu sur son écran de télévision. Le système de synthèse (87) fait alors une requête au disque dur (85) et commence à analyser le flux MPEG-2 TS modifié en provenance du disque dur (85) via le tampon de lecture (83). Le système de synthèse (87) établit alors une liaison avec le portail (12) via le réseau de télécommunication (10) qui est dans notre exemple une liaison DSL. Une fois cette liaison établie, et pendant toute la durée de visualisation du film ou du programme audiovisuel, le système de synthèse (87) fait parvenir de la mémoire tampon (123) du serveur (12) les paquets TS originaux et des informations numériques correspondant au flux enregistré sur le disque dur (85). Ces données parviennent au système de synthèse (87) via la mémoire tampon d'entrée (86) et sont stockés temporairement dans le système de synthèse (87). A partir du flux MPEG-2 TS modifié qui parvient via le tampon (83) et à partir des paquets TS originaux et des données associées qui parviennent via le tampon (86), le système de synthèse (87) reconstitue de façon inverse au processus d'analyse décrit précédemment, le flux MPEG-2 TS original et envoie le nouveau flux MPEG-2 TS ainsi reconstitué vers le lecteur (81) pour être affiché correctement sur l'écran (6).

Avantageusement, dès leur utilisation, les paquets TS originaux provenant du portail (12) via ledit deuxième flux, et les données associées sont effacés du système de synthèse (87).

Avantageusement, avant que le portail (12) n'envoie les paquets TS originaux et des données associées depuis son tampon (123), le portail (12) a vérifié que l'utilisateur du boîtier (8) était bien autorisé à recevoir ledit deuxième flux.

## Revendications

1. Procède pour la distribution depuis un équipement serveur (1) vers un équipement client (8) d'un flux nominal comprenant des séquences audiovisuelles selon un format de flux nominal, ledit procédé comprenant des étapes consistant à :
- générer avant la transmission à l'équipement client (8), d'un premier flux conforme au format de flux nominal;
- générer un deuxième flux d'un format quelconque, comportant les informations numériques aptes à permettre la reconstruction dudit flux nominal ;
- transmettre séparément , les deux flux ainsi générés depuis le serveur vers l'équipement destinataire ;
- et à calculer sur l'équipement destinataire une synthèse d'un flux au format nominal en fonction dudit premier flux et dudit deuxième flux :
lesdites séquences audiovisuelles sont selon un format de flux nominal respectant la norme MPEG-2 TS, composé d'une succession de paquets TS, et en ce que l'étape de génération du premier flux comprend une étape consistant à modifier ledit flux nominal en substituant tout ou partie des **paquet**s contenant le début d'une slice d'une image I par des paquets de même structure mais dont le contenu a été modifié, et en ce que ledit deuxième flux **contient** les **paquets substitués issu**s **du flux** normal pour effectuer la reconstitution dudit flux nominal à partir dudit premier flux.

2. Procédé pour la distribution de séquences audiovisuelles selon la revendication 1, **caractérisé en ce que** lesdits paquets TS substitués contiennent des informations relatives à un ou plusieurs flux vidéo inclus dans le flux TS.

3. Procédé pour la distribution de séquences audiovisuelles selon la revendication 1, **caractérisé en ce que** lesdits paquets TS substitués contiennent des informations relatives à un ou plusieurs flux audio inclus dans le flux TS.

4. Procédé pour la distribution de séquences audiovisuelles selon l'une des revendications précédentes, **caractérisé en ce que** ladite analyse du flux comporte une étape de détermination des paquets TS à substituer en fonction de leur contenu.

5. Procédé pour la distribution de séquences audiovisuelles selon l'une des revendications précédentes, **caractérisé en ce que** ledit deuxième flux respecte le format MPEG-2 TS.

6. Procédé pour la distribution de séquences audiovisuelles selon l'une des revendications précédentes, **caractérisé en ce que** ledit premier flux a la même taille en octets que le flux original en format MPEG-2 TS.

7. Procédé pour la distribution de séquences audiovisuelles selon l'une des revendications précédentes, **caractérisé en ce que** ledit premier flux et ledit deuxième flux sont transmis à l'équipement destinataire via le même réseau de communication.

8. Procédé pour la distribution de séquences audiovisuelles selon l'une des revendications précédentes **caractérisé en ce que** ledit deuxième flux est crypté.

9. Equipement pour la fabrication d'un flux au format MPEG 2 TS pour la mise en oeuvre du procédé selon l'une des revendications 1 à 8, comportant au moins un serveur multimédia contenant les séquences audiovisuelles au format de flux nominal MPEG 2 TS et comporte un dispositif d'analyse du flux nominal provenant dudit serveur pour générer lesdits deux flux.

10. Equipement pour l'exploitation d'un flux au format MPEG 2 TS pour la mise en oeuvre du procédé selon l'une des revendications 1 à 9, comprenant un lecteur standard de flux MPEG-2 TS, au moins une interface d'enregistrement [disque dur] destiné à stocker le contenu dudit premier flux et au moins une interface d'affichage, **caractérisé en ce qu'**il comporte un moyen pour la recomposition du flux original à partir desdits deux flux.

11. Système pour la transmission d'un flux au format MPEG 2 TS comprenant un équipement de production d'un flux au format MPEG 2 TS selon la revendication 9, au moins un équipement d'exploitation d'un flux au format MPEG 2 TS selon la revendication 10 et au moins un réseau de communication entre l'équipement de production et le(s) équipement(s) d'exploitation.

## Claims

1. A process for distributing from a server (1) to a client equipment (8) of a nominal stream comprising audiovisual sequences in accordance with a nominal stream format, said process comprising the following steps consisting to :
- generating before the transmission to the client equipment (8), of a first stream in accordance with the format of the nominal stream,
- generating of a second stream of any format, comprising digital information able to reconstruct said nominal stream,
- transmitting separately both generated streams from the server to the target equipment,
- and calculating on the target equipment a synthesis of the a stream at the nominal format based on said first stream and said second stream, said audiovisual sequences being in conformity with the MPEG-2 TS format, formed by a succession of TS packets and in that, the step of generating the first stream comprises a step consisting at modifying said nominal stream by substituting in the TS packets all or part of the packets containing the start of the slice I by packets of the same structure but having a modified content, and in that said second stream contains the substituted packets originating from the original stream for executing the reconstruction of said nominal stream from said first stream.

2. The process for distributing of audiovisual sequences according to claim 1, **characterized in that** said the substituted TS packets contain information relative to one or several video streams included in the TS stream.

3. The process for distributing of audiovisual sequences according to claim 1, **characterized in that**, the substituted TS packets contain information relative to one or several audio streams included in the TS stream.

4. The process for distributing of audiovisual sequences according to one of the preceding claims, **characterized in that** said analysis of the stream comprises a stage for determination of the TS packets to be substituted as a function of their content.

5. The process for distributing of audiovisual sequences according to one of the preceding claims, **characterized in that** said second stream respects the MPEG-2 TS format.

6. The process for distributing of audiovisual sequences according to one of the preceding claims, **characterized in that** the first stream has the same size in bytes as the original stream in MPEG-2 TS format.

7. The process for distributing of audiovisual sequences according to one of the preceding claims, **characterized in that** the first stream and the second stream are transmitted to the target equipment via the same communication network

8. The process for distributing of audiovisual sequences according to one of the preceding claims, **characterized in that** the second stream in encrypted.

9. Equipment for the production of a stream compliant with MPEG 2 TS format for applying the process according one of the claims 1 to 8, comprising at least one multimedia server containing original video sequences at the MPEG 2 TS format of the nominal stream and comprises a device for analyzing the nominal stream coming from the server for generating said two streams.

10. Equipment for exploiting a stream compliant with MPEG 2 TS format for applying the process according one of the claims 1 to 8, comprising at least one standard reader of MPEG 2 TS stream, at least one recording interface (hard disk) for storing the content of the first stream and at least one display interface, **characterized in that** it comprises means for recomposition of the original stream from said two streams.

11. A system for transmitting a video stream compliant with MPEG 2 TS format comprising equipment for the production of a video stream compliant with MPEG 2 TS format according to the claim 9, at least one piece of equipment for exploiting a video stream compliant with MPEG 2 TS format according to the claim 10, and at least one communication network between the production equipment and the piece or pieces of exploitation equipment.

## Patentansprüche

1. Verfahren zum Senden eines Nennstroms mit audiovisuellen Sequenzen von einer Servereinrichtung (1) zu einer Client-Einrichtung (8), nach einem Nennstromformat, wobei das Verfahren folgende Phasen umfasst:
- Erzeugen, vor der Übertragung an die Client-Einrichtung (8), eines ersten Stroms gemäß dem Nennstromformat;
- Erzeugen eines zweiten Stroms von beliebigem Format, mit den geeigneten digitalen Informationen für die Rekonstruktion des genannten Nennstroms;
- getrenntes Senden der beiden so erzeugten Flüsse vom Server an die Empfängereinrichtung;
- und Berechnung, in der Empfängereinrichtung, einer Synthese eines Stroms im Nennformat in Abhängigkeit von dem ersten Strom und dem zweiten Strom:
besagte audiovisuelle Sequenzen sind gemäß einem Nennstromformat, das die Norm MPEG-2-TS einhält, bestehend aus einer Folge von TS-Paketen, sowie **dadurch**, dass die Phase der Erzeugung des ersten Stroms eine Phase umfasst, die darin besteht, den Nennstrom zu verändern, indem man alle oder einen Teil der Pakete, die den Anfang einer Scheibe eines Bildes I enthalten, durch Pakete mit derselben Struktur ersetzt, deren Inhalt aber verändert wurde, sowie **dadurch**, dass der zweite Strom die ersetzten Pakete enthält, die aus dem Nennstrom kommen, um die Rekonstruktion des genannten Nennstroms ausgehend vom ersten Strom durchzuführen.

2. Verfahren zum Senden von audiovisuellen Sequenzen nach Anspruch 1, **gekennzeichnet dadurch, dass** die ersetzten TS-Pakete Informationen über einen oder mehrere Videoströme in dem TS-Strom enthalten.

3. Verfahren zum Senden von audiovisuellen Sequenzen nach Anspruch 1, **gekennzeichnet dadurch, dass** die ersetzten TS-Pakete Informationen über einen oder mehrere Audioströme in dem TS-Strom enthalten.

4. Verfahren zum Senden von audiovisuellen Sequenzen nach einem der vorhergehenden Ansprüche, **gekennzeichnet dadurch, dass** besagte Analyse des Stroms eine Phase der Ermittlung der zu ersetzenden TS-Pakete je nach ihrem Inhalt umfasst.

5. Verfahren zum Senden von audiovisuellen Sequenzen nach einem der vorhergehenden Ansprüche, **gekennzeichnet dadurch dass** der zweite Strom das Format MPEG-2 TS hat.

6. Verfahren zum Senden von audiovisuellen Sequenzen nach einem der vorhergehenden Ansprüche, **gekennzeichnet dadurch, dass** der erste Strom dieselbe Größe in Bytes wie der Originalstrom im Format MPEG-2 TS hat

7. Verfahren zum Senden von audiovisuellen Sequenzen nach einem der vorhergehenden Ansprüche, **gekennzeichnet dadurch, dass** der erste Strom und der zweite Strom über dasselbe Kommunikationsnetz an die Empfängereinrichtung übertragen werden.

8. Verfahren zum Senden von audiovisuellen Sequenzen nach einem der vorhergehenden Ansprüche, **gekennzeichnet dadurch dass** der zweite Strom verschlüsselt ist.

9. Einrichtung zur Erzeugung eines Stroms im Format MPEG 2 TS zur Durchführung des Verfahrens nach einem der Ansprüche 1 bis 8, mit mindestens einem Multimedia-Server, der die audiovisuellen Sequenzen im Format des Nennstroms MPEG 2 TS enthält und eine Analysevorrichtung für den Nennstrom umfasst, der von dem Server stammt, um besagte zwei Ströme zu erzeugen.

10. Einrichtung für die Ausnutzung eines Stroms im Format MPEG 2 TS zur Durchführung des Verfahrens nach einem der Ansprüche von 1 bis 9, mit einem Standard-Lesegerät für den Strom MPEG-2 TS, mindestens einer Aufnahmeschnittstelle [Festplatte], um den Inhalt des ersten Stroms zu speichern, und mindestens einer Anzeigeschnittstelle, **gekennzeichnet dadurch, dass** sie ein Mittel zur Wiederzusammensetzung des Originalstroms ausgehend von den zwei Strömen umfasst.

11. System zur Übertragung eines Stroms im Format MPEG-2 TS mit einer Einrichtung zur Erzeugung eines Stroms im Format MPEG-2 TS nach Anspruch 9, mindestens einer Einrichtung zur Auswertung eines Stroms im Format MPEG-2 TS nach Anspruch 10 und mindestens einem Kommunikationsnetz zur Kommunikation zwischen der Produktionseinrichtung und der/den Auswertungseinrichtung(en).
